# EUROPEAN PATENT APPLICATION

(11) **EP 4 841 761 A1**
(43) Date of publication of application: **18.11.2026**
(21) Application number: 24938414.0
(22) Date of filing: 16.07.2024
(51) Int. Cl.: H01M 50/172

(54) **BATTERY CELL, BATTERY AND ELECTRICAL DEVICE**

(30) Priority: 13.05.2024 CN 202410591758
(71) Applicant: Contemporary Amperex Technology Co., Limited, Ningde, Fujian 352100 (CN)
(72) Inventor: ZHANG, Xiaowei, Ningde, Fujian 352100 (CN); WU, Xiang, Ningde, Fujian 352100 (CN); WANG, Zejiang, Ningde, Fujian 352100 (CN); WEN, Yuqian, Ningde, Fujian 352100 (CN); TANG, Minghao, Ningde, Fujian 352100 (CN); ZHANG, Shengwu, Ningde, Fujian 352100 (CN)
(74) Representative: Aera A/S
(86) International application number: PCT/CN2024/105744
(87) International publication number: WO 2025/236397

(57) **Abstract**

A battery cell (20), a battery (100) and an electrical device. The battery cell (20) comprises a casing (21) and an electrode assembly (22), wherein the electrode assembly (22) is arranged in the casing (21). The electrode assembly(22) comprises a first electrode sheet (221) and a first insulating member (223), wherein the first electrode sheet (221) has a first end part (221a) in the lengthwise direction. The first insulating member (223) comprises first adhesive paper (223a) and second adhesive paper (223b), wherein the first adhesive paper (223a) and the second adhesive paper (223b) are respectively bonded to two side surfaces of the first end part (221a) in the direction of thickness; and in the lengthwise direction of the first electrode sheet (221), the first adhesive paper (223a) and the second adhesive paper (223b) both extend beyond the first end part (221a), and the portions of the first adhesive paper (223a) and the second adhesive paper (223b) extending beyond the first end part (221a) are bonded to each other. The first adhesive paper (223a) comprises a first adhesive region (101) coated with an adhesive layer and a first non-adhesive region (102) not coated with the adhesive layer, wherein in the direction of width of the first electrode sheet (221), the first non-adhesive region (102) is located at at least one end of the first adhesive paper (223a).

## Description

### CROSS-REFERENCE TO RELATED APPLICATIONS

The present application claims priority to Chinese Patent Application (202410591758.0), entitled "BATTERY CELL, BATTERY, AND ELECTRICAL DEVICE" filed on May 13, 2024, which is incorporated by reference in the present application.

### TECHNICAL FIELD

The present application relates to the technical field of batteries, and specifically relates to a battery cell, a battery, and an electrical device.

### BACKGROUND

Energy saving and emission reduction of vehicles is the key to the sustainable development of the automobile industry. Electric vehicles have become an important part of the sustainable development of the automobile industry because of their advantages of energy saving and environmental protection. For electric vehicles, the battery technology is an important factor in development.

Batteries are widely used in portable electronic devices, electric vehicles, power tools, unmanned aerial vehicles, energy storage devices, and other fields. In the manufacturing process of the batteries, the reliability of components inside is an issue that cannot be ignored. Therefore, how to improve the reliability of batteries is a technical problem that urgently needs to be solved in battery technology.

### SUMMARY OF THE INVENTION

Embodiments of the present application provide a battery cell, a battery, and an electrical device, aiming to improve reliability of the battery.

The present application is implemented by the following technical solution:
in a first aspect, the embodiment of the present application provides a battery cell, which includes a shell and an electrode assembly, wherein the electrode assembly is arranged in the shell and includes a first electrode plate and a first insulating member; the first electrode plate is provided with a first end portion in a length direction; the first insulating member includes a first adhesive tape and a second adhesive tape which are respectively bonded to two side surfaces of the first end portion in a thickness direction; in the length direction of the first electrode plate, the first adhesive tape and the second adhesive tape both extend beyond the first end portion, and the portions of the first adhesive tape and the second adhesive tape extending beyond the first end portion are bonded to each other;
the first adhesive tape includes a first adhesive region coated with an adhesive layer and a first non-adhesive region not coated with the adhesive layer; and in the width direction of the first electrode plate, the first non-adhesive region is located at at least one end of the first adhesive tape.

According to the battery cell provided by the embodiment of the present application, in the width direction of the first electrode plate, the first non-adhesive regions are located at at least one end of the first adhesive tape. Therefore, if the first adhesive tape and the second adhesive tape are misplaced in the width direction of the first electrode plate due to the tolerance of an adhering process, at least one end of the first adhesive tape in the width direction of the first electrode plate does not leak adhesive, but only the first non-adhesive regions without stickiness are leaked. Therefore, the adhesive leakage probability of the first insulating member is reduced, moreover, the problems of roll sticking, adhesive failure, tape breakage, even electrode plate damage, and the like caused by adhesive leakage are also reduced, thereby improving the reliability of the battery.

According to some embodiments of the present application, the first adhesive tape includes two first non-adhesive regions; and in the width direction of the first electrode plate, the two first non-adhesive regions are respectively located at two ends of the first adhesive tape, and the first adhesive region is located between the two first non-adhesive regions.

In the above solution, if the first adhesive tape and the second adhesive tape are misplaced in the width direction of the first electrode plate due to the tolerance of the adhering process, at least one end of the first adhesive tape in the width direction of the first electrode plate does not leak adhesive, but only the first non-adhesive regions without stickiness are leaked. Therefore, the adhesive leakage probability of the first insulating member is reduced, moreover, the problems of roll sticking, adhesive failure, tape breakage, even electrode plate damage, and the like caused by adhesive leakage are also reduced, thereby improving the reliability of the battery.

According to some embodiments of the present application, the second adhesive tape includes a second adhesive region coated with the adhesive layer and a second non-adhesive region not coated with the adhesive layer; and in the width direction of the first electrode plate, the second non-adhesive region is located at at least one end of the second adhesive tape.

In the above solution, if the second adhesive tape and the first adhesive tape are misplaced in the width direction of the first electrode plate due to the tolerance of the adhering process, at least one end of the second adhesive tape in the width direction of the first electrode plate does not leak adhesive, but only the second non-adhesive regions without stickiness are leaked. Therefore, the adhesive leakage probability of the first insulating member is reduced, moreover, the problems of roll sticking, adhesive failure, tape breakage, even electrode plate damage, and the like caused by adhesive leakage are also reduced, thereby improving the reliability of the battery.

According to some embodiments of the present application, the second adhesive tape includes two second non-adhesive regions; and in the width direction of the second electrode plate, the two second non-adhesive regions are respectively located at two ends of the second adhesive tape, and the second adhesive region is located between the two second non-adhesive regions.

In the above solution, if the second adhesive tape and the first adhesive tape are misplaced in the width direction of the first electrode plate due to the tolerance of the adhering process, at least one end of the second adhesive tape in the width direction of the first electrode plate does not leak adhesive, but only the second non-adhesive regions without stickiness are leaked. Therefore, the adhesive leakage probability of the first insulating member is reduced, moreover, the problems of roll sticking, adhesive failure, tape breakage, even electrode plate damage, and the like caused by adhesive leakage are also reduced, thereby improving the reliability of the battery.

According to some embodiments of the present application, in the width direction of the first electrode plate, the first electrode plate includes a first functional region coated with an active substance layer and a first uncoated foil region not coated with the active substance layer; in the width direction of the first electrode plate, the first functional region has a first edge and a second edge; and in the width direction of the first electrode plate, the first adhesive region extends beyond at least one of the first edge and the second edge, and/or, the second adhesive region extends beyond at least one of the first edge and the second edge.

In the above solution, the first adhesive region can be bonded to the first functional region, and meanwhile, the portion of the first adhesive region extending beyond the first functional region can be bonded to the first uncoated foil region or the second adhesive tape, thereby improving the connection stability of the first adhesive tape.

According to some embodiments of the present application, in the width direction of the first electrode plate, the first adhesive region and the second adhesive region both extend beyond the first edge and the second edge.

In the above solution, the first adhesive region can be bonded to the first functional region, and meanwhile, the portion of the first adhesive region extending beyond the first functional region can be bonded to the first uncoated foil region or the second adhesive tape, thereby improving the connection stability of the first adhesive tape; and the second adhesive region can be bonded to the first functional region, and meanwhile, the portion of the second adhesive region extending beyond the first functional region can be bonded to the first uncoated foil region or the second adhesive tape, thus improving the connection stability of the second adhesive tape.

According to some embodiments of the present application, in the width direction of the first electrode plate, the first electrode plate includes the first functional region coated with the active substance layer and the first uncoated foil region not coated with the active substance layer; in the width direction of the first electrode plate, the first functional region has the first edge and the second edge; and both the first adhesive region and the second adhesive region do not extend beyond the first edge and the second edge.

In the above solution, the shielding of the first insulating member on the first end portion is reduced, and thus the energy density of the battery cell is improved at least to a certain extent.

According to some embodiments of the present application, in the width direction of the first electrode plate, the first uncoated foil region is connected to the second edge, and the first uncoated foil region has a third edge away from the first functional region; and in the width direction of the first electrode plate, the first adhesive tape extends beyond at least one of the first edge and the third edge, and/or, the second adhesive tape extends beyond at least one of the first edge and the third edge.

In the above solution, in the width direction of the first electrode plate, the first adhesive tape extends beyond the first edge or the third edge, or the first adhesive tape extends beyond the first edge and the third edge. In the width direction of the first electrode plate, the second adhesive tape extends beyond the first edge or the third edge, or the second adhesive tape extends beyond the first edge and the third edge.

According to some embodiments of the present application, the first end portion has a fourth edge; in the length direction of the first electrode plate, the first adhesive tape and the second adhesive tape both extend beyond the fourth edge; and in the thickness direction of the first electrode plate, a joint of the third edge and the fourth edge is located between the first non-adhesive region and the second non-adhesive region.

In the above solution, a corner (the joint of the third edge and the fourth edge) of the first uncoated foil region can be fixedly supported by the first non-adhesive regions and the second non-adhesive regions, thereby effectively reducing the probability of the problems of bending deformation and the like of the first electrode plate.

According to some embodiments of the present application, in the width direction of the first electrode plate, sizes of the first non-adhesive regions are L₀, which meets: 1mm≤L₀≤6mm.

In the above solution, on one hand, if first adhesive tape and the second adhesive tape are misplaced in the width direction of the first electrode plate, the first non-adhesive regions are sufficient in width, so that the adhesive layer of the first adhesive tape is not exposed; and on the other hand, it also prevents the sizes of the first non-adhesive regions from being too large, which would result in insufficient sizes of the first adhesive region, thereby affecting the bonding performance of the first adhesive tape.

According to some embodiments of the present application, the maximum thickness of the first adhesive tape is t₁, the maximum thickness of the second adhesive tape is t₂, the maximum thickness of a first end portion is t₃, and t₁≤t₃, t₂≤t₃.

In the above solution, the maximum thickness of the first adhesive tape is less than that of the first end portion, and if a step is formed between the first adhesive tape and a side surface of the first end portion in the thickness direction, the step is lower than the step between the first end portion and an adjacent electrode plate region when the first insulating member is not arranged, and therefore, the stress concentration generated by the step can be reduced, and the risk of cracking of the first electrode plate caused by the stress concentration is reduced. Similarly, the maximum thickness of the second adhesive tape is less than that of the first end portion, and if a step is formed between the second adhesive tape and the side surface of the first end portion in the thickness direction, the step is lower than the step between the first end portion and the adjacent electrode plate region when the first insulating member is not arranged, and therefore, the stress concentration generated by the step can be reduced, and the risk of cracking of the first electrode plate caused by the stress concentration is reduced.

According to some embodiments of the present application, t₁+t₂≤t₃.

In the above solution, if the first adhesive tape and the second adhesive tape still form the steps relative to the side surface of the first end portion in the thickness direction, the height of the step is relatively small and is always less than the height of the step between the first end portion and the adjacent electrode plate region when the first insulating member is not arranged, such that the stress concentration generated by the steps can be reduced, and the risk of cracking of the first electrode plate caused by the stress concentration is reduced.

According to some embodiments of the present application, t₁≤0.5t₃, t₂≤0.5t₃.

In the above solution, the height of the step between the first adhesive tape and the first end portion is further reduced, and the height of the step between the second adhesive tape and the first end portion is reduced. Therefore, the stress concentration generated by the steps can be reduced, and the risk of cracking of the first electrode plate is reduced.

According to some embodiments of the present application, in the thickness direction of the first end portion, a projection of the first insulating member and the projection of the first end portion have a first overlapped region; and in the length direction of the first electrode plate, the maximum size of the first overlapped region is L₁, and L₁≤100mm.

In the above solution, on one hand, the first insulating member always keeps connecting with the first end portion and covers at least part of the first end portion to shield burrs, thereby reducing the probability that the burrs pierce a separator; and on the other hand, the first overlapped region is not too large, and the first insulating member does not cover too many regions of the first electrode plate, so that the influence on the energy density of the battery cell is relatively small.

According to some embodiments of the present application, 2mm≤L₁≤15mm.

In the above solution, on one hand, the first insulating member always keeps connecting with the first end portion and covers at least part of the first end portion to shield burrs, thereby further reducing the probability that the burrs pierce a separator; and on the other hand, the first overlapped region is not too large, and the first insulating member does not cover too many regions of the first electrode plate, so that the energy density of the battery cell is further ensured.

According to some embodiments of the present application, the first electrode plate has two first end portions which are respectively located at two ends of the first electrode plate in the length direction, and each first end portion is provided with the first insulating member.

In the above solution, the two ends of the first electrode plate in the length direction can be protected by the first insulating members, and burrs at the two ends of the first electrode plate in the length direction can be effectively shielded, thus the risk of short circuit in the positive electrode plate and the negative electrode plate caused by the burrs piercing the separator can be reduced, and the reliability of the battery is improved.

According to some embodiments of the present application, the electrode assembly also includes: a second electrode plate which is one of the positive electrode plate and the negative electrode plate, the first electrode plate being the other one of the positive electrode plate and the negative electrode plate, and the second electrode plate having a second end portion in the length direction; and a second insulating member which includes a third adhesive tape and a fourth adhesive tape, the third adhesive tape and the fourth adhesive tape being respectively bonded to two side surfaces of the second end portion in the thickness direction; in the length direction of the second electrode plate, the third adhesive tape and the fourth adhesive tape both extend beyond the second end portion, and the portions of the third adhesive tape and the fourth adhesive tape extending beyond the second end portion are bonded to each other;

the third adhesive tape includes a third adhesive region coated with the adhesive layer and a third non-adhesive region not coated with the adhesive layer; and in the width direction of the second electrode plate, the third non-adhesive region is located at at least one end of the third adhesive tape.

In the above solution, if the third adhesive tape and the fourth adhesive tape cannot be aligned in the width direction of the second electrode plate due to the adhering process, the third non-adhesive region is arranged on at least one end of the third adhesive tape in the width direction of the second electrode plate, such that at least one end of the third adhesive tape in the width direction of the second electrode plate cannot leak adhesive, and only the third non-adhesive region without stickiness is leaked.

According to some embodiments of the present application, the third adhesive tape includes two third non-adhesive regions; in the width direction of the second electrode plate, the two third non-adhesive regions are respectively located at two ends of the third adhesive tape; and the third adhesive region is located between the two third non-adhesive regions.

In the above solution, if the third adhesive tape and the fourth adhesive tape are misplaced in the width direction of the second electrode plate due to the tolerance of the adhering process, at least one end of the third adhesive tape in the width direction of the second electrode plate does not leak adhesive, but only the third non-adhesive regions without stickiness are leaked. Therefore, the adhesive leakage probability of the second insulating member is reduced, and the problems of roll sticking, adhesive failure, tape breakage, even electrode plate damage, and the like caused by adhesive leakage are also reduced, thereby improving the reliability of the battery.

According to some embodiments of the present application, the fourth adhesive tape includes a fourth adhesive region coated with the adhesive layer and a fourth non-adhesive region not coated with the adhesive layer; and in the width direction of the second electrode plate, the fourth non-adhesive region is located at at least one end of the fourth adhesive tape.

In the above solution, if the fourth adhesive tape and the third adhesive tape are misplaced in the width direction of the second electrode plate due to the tolerance of the adhering process, at least one end of the fourth adhesive tape in the width direction of the second electrode plate does not leak adhesive, but only the fourth non-adhesive regions without stickiness are leaked. Therefore, the adhesive leakage probability of the second insulating member is reduced, and the problems of roll sticking, adhesive failure, tape breakage, even electrode plate damage, and the like caused by adhesive leakage are also reduced, thereby improving the reliability of the battery.

According to some embodiments of the present application, the fourth adhesive tape includes two fourth non-adhesive regions; in the width direction of the second electrode plate, the two fourth non-adhesive regions are respectively located at two ends of the fourth adhesive tape; and the fourth non-adhesive region is located between the two fourth non-adhesive regions.

In the above solution, if the fourth adhesive tape and the third adhesive tape are misplaced in the width direction of the second electrode plate due to the tolerance of the adhering process, at least one end of the fourth adhesive tape in the width direction of the second electrode plate does not leak adhesive, but only the fourth non-adhesive regions without stickiness are leaked. Therefore, the adhesive leakage probability of the second insulating member is reduced, and the problems of roll sticking, adhesive failure, tape breakage, even electrode plate damage, and the like caused by adhesive leakage are also reduced, thereby improving the reliability of the battery.

According to some embodiments of the present application, the second electrode plate has two second end portions which are respectively located on at two ends of the second electrode plate in the length direction; and each second end portion is provided with the second insulating member.

In the above solution, the two ends of the first electrode plate in the length direction can be protected by the second insulating members, and burrs at the two ends of the second electrode plate in the length direction can be effectively shielded, thus the risk of short circuit in the positive electrode plate and the negative electrode plate caused by the burrs piercing the separator can be reduced, and the reliability of the battery is improved.

According to some embodiments of the present application, the electrode assembly is of a winding structure, and the length direction of the first electrode plate is a winding direction of the first electrode plate.

In the above solution, the first end portion can be a winding starting end or/and a winding ending end of the first electrode plate.

In a second aspect, an embodiment of the present application provides a battery, which includes the battery cell in the above embodiments.

In a third aspect, an embodiment of the present application provides an electrical device including the battery in the above embodiment.

The additional aspects and advantages of the present application will be partially described below, parts of which will become apparent from the description below, or will be understood by the practice of the present application.

### DESCRIPTION OF DRAWINGS

In order to more clearly illustrate the technical solutions of the embodiments of the present application, the accompanying drawings that need to be used in the embodiments will be briefly introduced below, and it is to be understood that the following accompanying drawings only show some embodiments of the present application and therefore should not be regarded as limiting the scope. For those skilled in the art, other relevant accompanying drawings can also be obtained based on these accompanying drawings without creative work.
FIG. 1 is a schematic diagram of a vehicle provided by an embodiment of the present application;
FIG. 2 is an exploded view of a battery provided by an embodiment of the present application;
FIG. 3 is an exploded view of a battery cell provided by an embodiment of the present application;
FIG. 4 is a schematic diagram of an electrode assembly provided by an embodiment of the present application;
FIG. 5 is a schematic diagram of an unfolded first electrode plate and an unfolded second electrode plate provided by an embodiment of the present application;
FIG. 6 is a schematic diagram of another electrode assembly provided by an embodiment of the present application;
FIG. 7 is a schematic diagram of yet another electrode assembly provided by an embodiment of the present application;
FIG. 8 is a schematic diagram of a first end portion and a first insulating member in cooperation provided by an embodiment of the present application;
FIG. 9 is a schematic diagram of another first end portion and a first insulating member in cooperation provided by an embodiment of the present application;
FIG. 10 is a schematic diagram of yet another first end portion and a first insulating member in cooperation provided by an embodiment of the present application;
FIG. 11 is a schematic diagram of yet another first end portion and a first insulating member in cooperation provided by an embodiment of the present application;
FIG. 12 is a schematic diagram of yet another first end portion and a first insulating member in cooperation provided by an embodiment of the present application;
FIG. 13 is a schematic diagram of yet another first end portion and a first insulating member in cooperation provided by an embodiment of the present application;
FIG. 14 is a schematic diagram of yet another first end portion and a first insulating member in cooperation provided by an embodiment of the present application;
FIG. 15 is a schematic diagram of yet another first end portion and a first insulating member in cooperation provided by an embodiment of the present application;
FIG. 16 is a schematic diagram of a second end portion and a second insulating member in cooperation provided by an embodiment of the present application; and
FIG. 17 is a schematic diagram of another second end portion and a second insulating member in cooperation provided by an embodiment of the present application.

Reference numerals: 1000, vehicle; 100, battery; 200, controller; 300, motor; 10, box; 20, battery cell; 11, first sub-box; 12, second sub-box; 21, shell; 22, electrode assembly; 25, electrode terminal; 211, case; 212, end cover; 223, first insulating member; 223a, first adhesive tape; 223b, second adhesive tape; 101, first adhesive region; 102, first non-adhesive region; 103, second adhesive region; 104, second non-adhesive region; 221, first electrode plate; 221a, first end portion; 105, first functional region; 106, first uncoated foil region; 105a, first edge; 105b, second edge; 106a, third edge; 106b, fourth edge; 224, second insulating member; 224a, third adhesive tape; 224b, fourth adhesive tape; 107a, third adhesive region; 107b, third non-adhesive region; 108a, fourth adhesive region; 108b, fourth non-adhesive region; 222, second electrode plate; and 222a, second end portion.

### DETAILED DESCRIPTION

For the objectives, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the examples of the present application rather than all the embodiments. All the other embodiments obtained by a person of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to restrict the present application. The terms "include" and "having" and any variations thereof in the specification and the claims of the present application as well as the foregoing description of the drawings are intended to cover non-exclusive inclusions. The terms "first," "second," etc. in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The occurrence of the phrase in various places in the description does not necessarily refer to the same embodiment, nor is it an independent or alternative embodiment that is mutually exclusive with other embodiments. It is explicitly and implicitly understood by those skilled in the art that the embodiments described in the present application may be combined with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In some embodiments, the battery may be a battery module. When there are a plurality of battery cells, the plurality of battery cells are provided and fixed to form a battery module.

In some examples, the battery may be a battery pack. The battery pack includes a box body and a battery cell. The battery cell or the battery module is accommodated in the box body.

In some embodiments, the box body may serve as a part of a chassis structure of the vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus comprises an energy storage container, or an energy storage cabinet, etc.

In the embodiment of the present application, the battery cell can be a secondary battery, and the secondary battery refers to a battery cell which can be continuously used by activating an active material in a charging way after being discharged.

The battery cell may include, but is not limited to, a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like.

The battery cell generally includes an electrode assembly. The electrode assembly includes a positive electrode, a negative electrode and a spacer. In the charging and discharging process of the battery cell, active ions (such as lithium ions) are intercalated and de-intercalated between the positive electrode and the negative electrode in a reciprocating manner. The spacer is arranged between the positive electrode and the negative electrode, and can function to prevent short circuit between the positive electrode and the negative electrode and allow the active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite in its own thickness direction, and the positive electrode active material is arranged on either one or both of the two opposite surfaces of the positive electrode current collector.

As an example, the positive electrode current collector may be a metal foil or composite current collector. For example, if it is the metal foil, silver-plated aluminum, silver-plated stainless steel, stainless steel, copper, aluminum, nickel, carbon-fine electrode, carbon, nickel or titanium and the like can be adopted. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene glycol terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, the present application is not limited to these materials, and other conventional materials useful as positive electrode active materials for batteries can also be used.

In some implementations, the negative electrode may be a negative electrode plate, and the negative electrode plate may comprise a negative electrode current collector.

As an example, the negative electrode current collector may be a metal foil or composite current collector. For example, if it is the metal foil, silver-plated aluminum, silver-plated stainless steel, stainless steel, copper, aluminum, nickel, carbon-fine electrode, carbon, nickel or titanium and the like can be adopted.

In some embodiments, the negative electrode current collector has two opposite surfaces in the thickness direction, and the negative electrode active material is arranged on any one of or both the two opposite surfaces of the negative electrode current collector.

As an example, a negative electrode active material for a battery well-known in the art may be used as the positive electrode active material. As an example, the negative electrode active material may comprise at least one of the following materials: artificial graphite, natural graphite, soft carbon, hard carbon, silicon-based material, tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the spacer is a separator. A type of the separator is not particularly limited in the present application, and any well-known separator with a porous structure having good chemical stability and mechanical stability may be selected.

As an example, the main material of the separator can be selected from at least one of glass fibers, non-woven fabric, polyethylene, polypropylene, polyvinylidene fluoride, and ceramic. The separator can be either a single-layer thin film or a multi-layer composite thin film without special limitations. When the separator film is a multi-layer composite thin film, the materials of the layers can be the same or different, which is not particularly limited. The spacer may be a single component located between the positive and negative electrodes, or may also be attached to the surfaces of the positive and negative electrodes.

In some embodiments, the separator is a solid electrolyte. The solid electrolyte is arranged between the positive electrode and the negative electrode, and functions to transport ions and isolate the positive electrode from the negative electrode.

In some embodiments, the battery cell further includes an electrolyte, and the electrolyte plays a role in conducting ions between the positive electrode and the negative electrode. The electrolyte may be liquid, gel or solid. The liquid electrolyte includes electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone. The solvent may be selected from ether solvents. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

The gel electrolyte includes a skeleton network with a polymer as the electrolyte, paired with an ionic liquid-lithium salt.

The solid electrolyte includes a polymer solid electrolyte, an inorganic solid electrolyte, and a composite solid electrolyte.

For example, the polymer solid electrolyte may be polyether (polyoxyethylene), polysiloxane, polycarbonate, polyacrylonitrile, polyvinylidene fluoride, polymethyl methacrylate, a single-ion polymer, a polyionic liquid-lithium salt, cellulose and the like.

For example, the inorganic solid electrolyte may include one or more of an oxide solid electrolyte (crystalline perovskite, a sodium superconducting ion conductor, garnet and an amorphous LiPON film), a sulfide solid electrolyte (a crystalline lithium superconducting ion conductor (lithium germanium phosphorus sulfur and sulfur silver germanium ore), and amorphous sulfide), a halide solid electrolyte, a nitride solid electrolyte, and a hydride solid electrolyte.

For example, the composite solid electrolyte is formed by adding an inorganic solid electrolyte filler into the polymer solid electrolyte.

In some embodiments, the electrode assembly is of a wound structure. The positive electrode plate and the negative electrode plate are wound into the wound structure.

In some embodiments, the electrode assembly is a stacked structure.

In some implementations, the battery cell may comprise a shell. The shell is used to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

In some embodiments, the shell comprises an end cover and a case, the case is provided with an opening, and the end cover closes the opening to form a closed space for accommodating substances such as the electrode assembly and the electrolyte. The case may be provided with one or a plurality of openings. One or more end covers may also be provided.

In some implementations, the shell is provided with at least one electrode terminal, and the electrode terminal is electrically connected to a tab of the electrode assembly. The electrode terminal can be directly connected to the tab, or can also be indirectly connected to the tab through an adapter. The electrode terminal may be provided on the end cover, or may also be provided on the case.

In some embodiments, the shell is provided with an explosion-proof valve. The explosion-proof valve is configured to release the internal pressure of the battery cell.

As an example, the battery cell can be a cylindrical battery cell, a prismatic battery cell, a pouch battery cell, or a battery cell in other shapes; the prismatic battery cell includes a square-case battery cell, a blade-shaped battery cell, a polygon prism shaped battery, such as a hexagonal prism battery, and there is no special limitation in this embodiment of the present application.

The battery mentioned in the embodiments of the present application refers to a single physical module including one or more battery cells to provide higher voltage and capacity.

In some embodiments, the battery may be a battery module. When there are a plurality of battery cells, the plurality of battery cells are arranged and fixed to form a battery module.

In some examples, the battery may be a battery pack. The battery pack includes a box body and a battery cell. The battery cell or the battery module is accommodated in the box body.

In some embodiments, the box body may serve as a part of a chassis structure of the vehicle. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, an energy storage cabinet, or the like.

Batteries have the outstanding advantages of high energy density, low environmental pollution, high power density, long service life, wide adaptation range, and small self-discharge coefficient, and are an important part in new energy development today.

In the development of battery technology, it is needed to consider many design factors at the same time, such as energy density, discharge capacity, charge-discharge rate and other performance parameters, in addition, it is also necessary to consider the assembling efficiency of batteries.

The battery cell disclosed by this embodiment of the present application can be used in electrical devices such as vehicles, ships or aircrafts. The battery cell, the battery, and the like disclosed by the present application can be used for forming a power source system of the electrical apparatus.

The embodiment of the present application provides an electrical device that uses a battery cell as a power source; and the electrical device can be, but is not limited to, mobile phones, tablet computers, laptops, electric toys, power tools, electric bicycles, electric motorcycles, electric vehicles, ships, spacecraft, and so on. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

The following embodiment, for the convenience of illustration, takes an electrical device in one embodiment of the present application being a vehicle 1000 as an example.

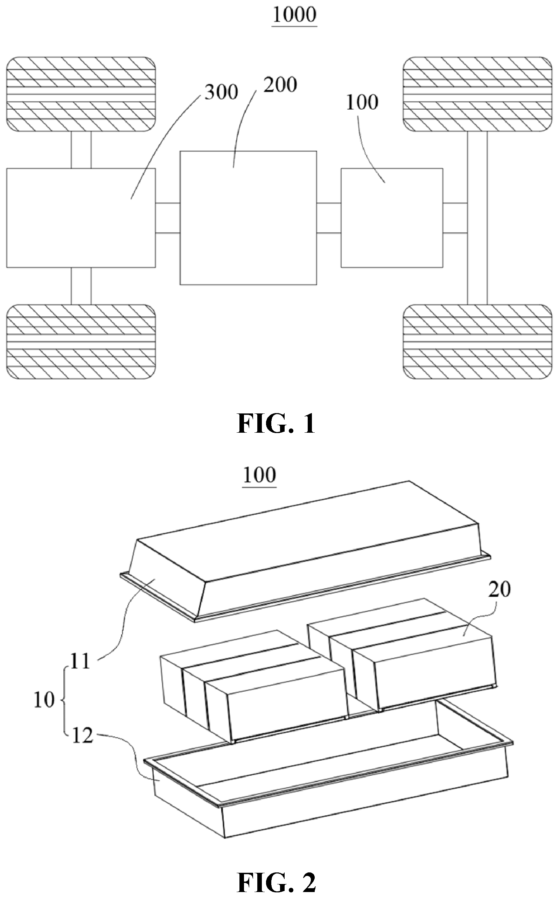

With reference to FIG. 1, FIG. 1 is a schematic diagram of a vehicle provided by an Embodiment 1 of the present application. The vehicle 1000 may be a fuel vehicle, a gas vehicle or a new energy vehicle, and the new energy vehicle may be a pure electric vehicle, a hybrid electric vehicle or an extended-range vehicle and the like. A battery 100 is provided in the vehicle 1000. The battery 100 may be provided at the bottom or head portion or tail portion of the vehicle 1000. The battery 100 may be used for supplying power to the vehicle 1000. For example, the battery 100 may be used as an operating power source of the vehicle 1000, which is used for a circuit system of the vehicle 1000, for example, for operation power requirements of the vehicle 1000 during starting, navigation, and running.

The vehicle 1000 may further include a controller 200 and a motor 300. The controller 200 is configured to control the battery 100 to supply power to the motor 300, for example, serve to satisfy operating power demand when the vehicle 1000 is starting, navigating, and running.

In some embodiments of the present application, the battery 100 can serve as the operation power source of the vehicle 1000 and can also serve as a driving power source of the vehicle 1000, and replaces or partially replace fuel oil or natural gas to provide driving power for the vehicle 1000.

With reference to FIG. 2, FIG. 2 is an exploded diagram of a battery provided by an Embodiment 1 of the present application. The battery 100 includes a box 10 and a battery cell 20; and the battery cell 20 is accommodated within the box 10. The box 10 is used to provide an accommodating space for the battery cells 20, and the box 10 can be of a variety of structures. In some embodiments, the box 10 may comprise a first sub-box 11 and a second sub-box 12. The first sub-box 11 and the second sub-box 12 are covered by each other, and the first sub-box 11 and the second sub-box 12 together define an accommodating space for accommodating the battery cells 20. The second sub-box 12 may be of a hollow structure with one end open, the first sub-box 11 may be of a plate-like structure, and the first sub-box 11 covers the opening side of the second sub-box 12, so that the first sub-box 11 and the second sub-box 12 together define the accommodating space. Both of the first sub-box 11 and the second sub-box 12 may also be of a hollow structure with one side open, and the opening side of the first sub-box 11 covers the opening side of the second sub-box 12.

In the battery 100, there may be a plurality of battery cells 20, and the plurality of battery cells 20 may be connected in series or in parallel or in parallel-series connection, where the parallel-series connection means that the plurality of battery cells 20 are connected in both series and parallel. The plurality of battery cells 20 may be directly connected together in series or in parallel or in parallel-series connection, and then the whole composed of the plurality of battery cells 20 may be accommodated in the box 10. Of course, the battery 100 may also be in the form of a battery module first formed by the plurality of battery cells 20 being connected in series or in parallel or in parallel-series connection, then the plurality of battery modules may be connected in series or in parallel or in parallel-series connection to form a whole, and accommodated in the box 10. The battery 100 may further include other structures, for example, the battery 100 may further include a current converging component for achieving electrical connection between the plurality of battery cells 20.

The battery cells 20 can be secondary batteries or primary batteries, or lithium-sulfur batteries, sodium-ion batteries or magnesium-ion batteries, but not limited thereto.

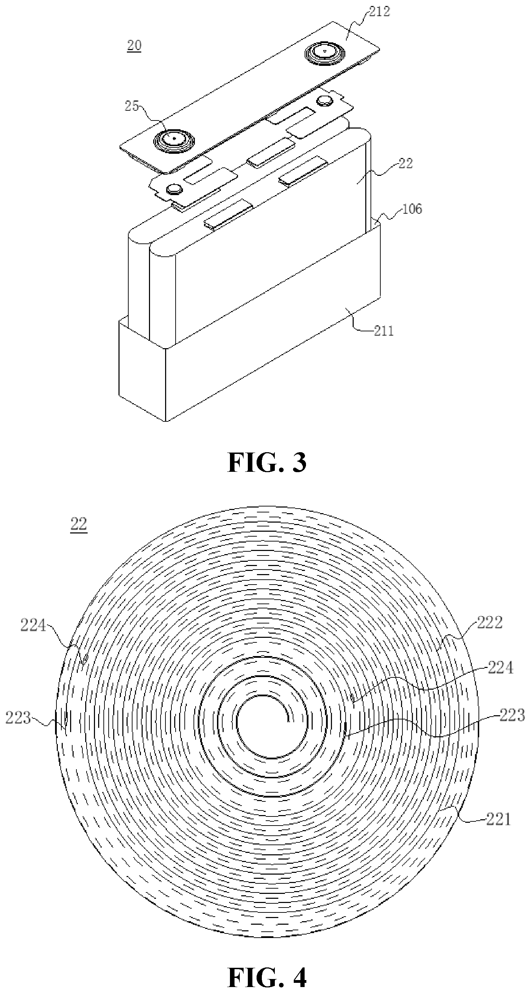

With reference to FIG. 3, FIG. 3 is an exploded view of a battery cell provided by some embodiments of the present application. As shown in FIG. 3, the battery cells 20 include a case 21, an electrode assembly 22, and an electrode terminal 25. The case 21 includes a shell 211 and an end cap 212, the shell 211 has an opening, and the end cap 212 closes the opening to isolate internal environments of the battery cells 20 from the external environment.

The case 211 is an assembly matched with the end cover 212 to form the internal environment of the battery cell 20, in which, the formed internal environment can be used for accommodating the electrode assembly 22, the electrolyte and other components. The case 211 and the end cover 212 can be independent components. The case 211 can be in various shapes and various sizes. Specifically, the shape of the case 211 can be determined according to the specific shape and size of the electrode assembly 22. The case 211 can be made of various materials, such as copper, iron, aluminum, stainless steel, aluminum alloy, and plastic.

The end cover 212 refers to a component which covers an opening of the case 211 to isolate an internal environment of the battery cell 20 from an external environment. The end cover 212 can be adapted to the case 211 by shape without limitation so as to be matched with the case 211. Optionally, the end cover 212 can be made of a material (such as aluminum alloy) with certain hardness and strength, so that the end cover 212 is not easy to deform when being extruded and collided, the battery cell 20 can have higher structural strength, and the reliability can be improved. The end cover 212 may be provided with functional components such as an electrode terminal. The electrode terminal can be electrically connected to the electrode assembly 22 to output or input electric energy of the battery cell 20. There may be many kinds of materials of the casing 212, such as copper, iron, aluminum, stainless steel, aluminum alloy, and plastic, which is not specifically limited in the embodiment of the present application. In some embodiments, an insulating structure also can be arranged at the inner side of the end cover 212, and the insulating structure can be configured to isolate an electric connection part in the case 211 from the end cover 212, so that the risk of short circuit is reduced. By way of example, the insulating structure can be made of plastic, rubber, and the like.

The electrode assembly 22 is a component that can generate an electrochemical reaction in the battery cell 20. The case 211 may internally include one or more electrode assemblies 22. The electrode assembly 22 is mainly formed by winding or laminating a positive electrode plate and a negative electrode plate, and a separator is usually arranged between the positive electrode plate and the negative electrode plate and configured to separate the positive electrode plate from the negative electrode plate to relieve internal short circuit of the positive electrode plate and the negative electrode plate. The parts, with active substances, of the positive electrode plate and the negative electrode plate form a main body part of the electrode assembly; and the parts, without the active materials, of the positive electrode plate and the negative electrode plate respectively form tabs. A positive electrode tab and a negative electrode tab can be jointly located at one end of the main body part or respectively positioned at two ends of the main body part. In the charging and discharging process of the battery, a positive electrode active substance and a negative electrode active substance react with the electrolyte, and the tabs are connected to the electrode terminal to form a current loop.

In related technology, there are burrs in the end portions of the electrode plates of the electrode assembly, so protective layers are needed to wrap the ends to reduce the risk that the burrs are exposed, thereby reducing the occurrence of short circuit in the positive electrode plate and the negative electrode plate caused by the burrs piercing the separator.

Generally, the protective layers consist of two layers of tapes and are bonded to both sides of the end portions of the electrode plate in the thickness direction; the tapes include substrates and adhesive layers, the adhesive layers generally cover the entire surface of the substrates; however, due to tolerances in the adhering process, if the two tapes are bonded to both sides of the end portions of thee electrode plate in the thickness direction, misalignment may easily occur, leading to issues such as adhesive layers being exposed, even causing overflowing of adhesive, roll sticking, adhesive failure, tape breakage, even electrode plate damage, resulting in influence on the quality and safety of a battery cell.

Therefore, the present application proposes a battery cell, the reliability of which can be improved.

The battery cell 20 according to the embodiments of the present application includes a shell 21 and an electrode assembly 22.

The shell 21 can be made of a metal material or a non-metal material, and can define an accommodating space.

The electrode assembly 22 is arranged in the shell 21, namely, the electrode assembly 22 can be accommodated in the accommodating space.

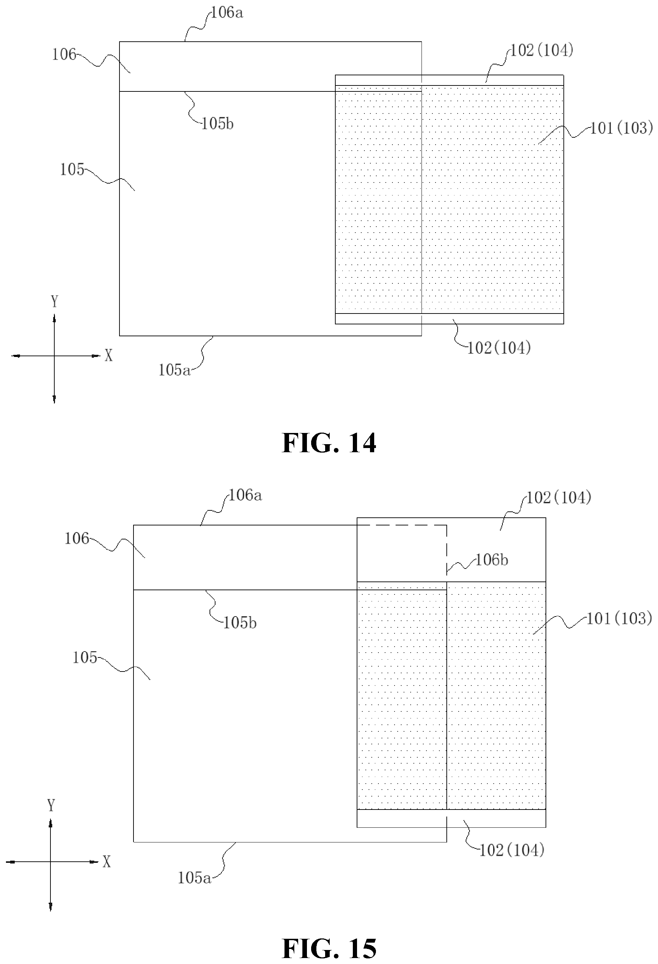

As shown in FIG. 4 to FIG. 15, the electrode assembly 22 can include a first electrode plate 221, the first electrode plate 221 can be a positive electrode plate or a negative electrode plate, which is not limited in this embodiment of the present application.

The first electrode plate 221 has a first end portion 221a in a length direction, and it is to be understood that if the electrode assembly 22 is of a winding structure, the length direction of the first electrode plate 221 is the winding direction of the first electrode plate 221.

One end of the first electrode plate 221 in the length direction (letter X in the figure) may have the first end portion 221a, and the two ends of the first electrode plate 221 in the length direction may also have the first end portions 221a.

If the electrode assembly 22 is of a winding structure, the first end portion 221a can be the winding starting end or the winding ending end of the first electrode plate 221.

The electrode assembly 22 further includes a first insulating member 223, the first insulating member 223 can be arranged at the first end portion 221a and can shield burrs on the first end portion 221a so as to reduce the risk that the burrs pierce a separator to cause short circuit of the positive electrode and the negative electrode.

The first insulating member 223 includes a first adhesive tape 223a and a second adhesive tape 223b which are respectively bonded to two side surfaces of the first end portion 221a in the thickness direction.

That is, the first adhesive tape 223a is adhered to one side surface of the first end portion 221a in the thickness direction, and the second adhesive tape 223b is adhered to the other side surface of the first end portion 221a in the thickness direction.

In the length direction of the first electrode plate 221, the first adhesive tape 223a and the second adhesive tape 223b both extend beyond the first end portion 221a, and the portions of the first adhesive tape 223a and the second adhesive tape 223b extending beyond the first end portion 221a are bonded to each other.

That is, in the length direction of the first electrode plate 221, the first adhesive tape 223a and the second adhesive tape 223b are not flush with the first end portion 221a, but extend beyond the first end portion 221a, such that the first adhesive tape 223a and the second adhesive tape 223b can be respectively bonded to two side surfaces of the first end portion 221a in the thickness direction and can be bonded and fixed together.

The first adhesive tape 223a includes a first adhesive region 101 coated with an adhesive layer and a first non-adhesive region 102 not coated with the adhesive layer; and in the width direction of the first electrode plate 221, the first non-adhesive region 102 is located at at least one end of the first adhesive tape 223a.

That is, the adhesive layer of the first adhesive tape 223a does not cover the whole surface of the substrate of the first adhesive tape 223a, but a portion of the region without the adhesive layer forms the first non-adhesive region 102.

In the width direction of the first electrode plate 221 (letter Y in the figure), the first non-adhesive region 102 is located at at least one end of the first adhesive tape 223a, that is, the first non-adhesive region 102 can be located at one end of the first adhesive tape 223a in the width direction, or the first non-adhesive region 102 can be located at both ends of the first adhesive tape 223a in the width direction.

Therefore, if the first adhesive tape 223a and the second adhesive tape 223b cannot be aligned in the width direction of the first electrode plate 221 due to the adhering process, the first non-adhesive region 102 is arranged on at least one end of the first adhesive tape 223a in the width direction of the first electrode plate 221, such that at least one end of the first adhesive tape 223a in the width direction of the first electrode plate 221 cannot leak adhesive, and only the first non-adhesive region 102 without stickiness is leaked.

For example, if the first non-adhesive region 102 is arranged at one end of the first adhesive tape 223a in the width direction, and at least the first adhesive tape 223a is misplaced relative to the second adhesive tape 223b in the width direction of the first electrode plate 221 (and from the first adhesive region 101 to the first non-adhesive region 102), the first non-adhesive region 102 is leaked, and the adhesive is not directly leaked.

According to the battery cell 20 provided by the embodiment of the present application, in the width direction of the first electrode plate 221, the first non-adhesive region 102 is located at at least one end of the first adhesive tape 223. Therefore, if the first adhesive tape 223a and the second adhesive tape 223b are misplaced in the width direction of the first electrode plate 221 due to the tolerance of an adhering process, at least one end of the first adhesive tape 223a in the width direction of the first electrode plate 221 does not leak adhesive, but only the first non-adhesive region 102 without stickiness are leaked. Therefore, the adhesive leakage probability of the first insulating member 223 is reduced, moreover, the problems of roll sticking, adhesive failure, tape breakage, even electrode plate damage, and the like caused by adhesive leakage are also reduced, thereby improving the reliability of the battery.

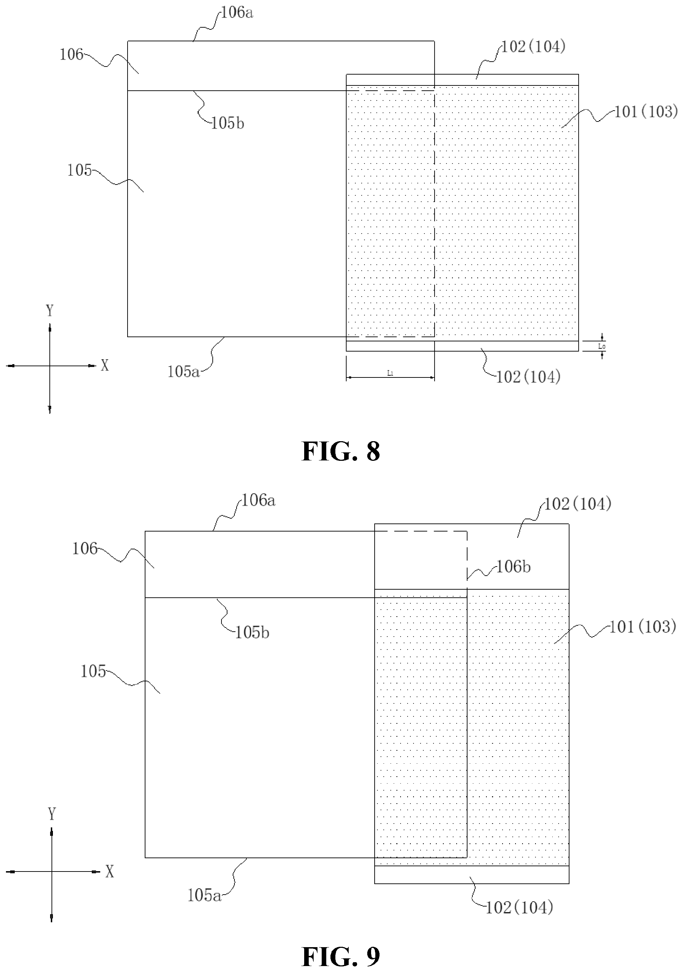

According to some embodiments of the present application, as shown in FIG. 8 to FIG. 15, the first adhesive tape 223a includes two first non-adhesive regions 102; in the width direction of the first electrode plate 221, the two first non-adhesive regions 102 are respectively located at two ends of the first adhesive tape 223a; and the first adhesive region 101 is located between the two first non-adhesive regions 102.

That is, in the width direction of the first electrode plate 221, one first non-adhesive region 102 is connected to one end of the first adhesive region 101, and the other first non-adhesive region 102 is connected to the other end of the first adhesive region 101.

Therefore, if the first adhesive tape 223a and the second adhesive tape 223b are misplaced in the width direction of the first electrode plate 221 due to the tolerance of the adhering process, at least one end of the first adhesive tape 223a in the width direction of the first electrode plate 221 does not leak adhesive, but only the first non-adhesive regions 102 without stickiness are leaked. Therefore, the adhesive leakage probability of the first insulating member 223 is reduced, moreover, the problems of roll sticking, adhesive failure, tape breakage, even electrode plate damage, and the like caused by adhesive leakage are also reduced, thereby improving the reliability of the battery.

In some embodiments of the present application, as shown in FIG. 8 to FIG. 15, the second adhesive tape 223b includes a second adhesive region 103 coated with the adhesive layer and a second non-adhesive region 104 not coated with the adhesive layer; and in the width direction of the first electrode plate 221a, the first non-adhesive regions 102 are located at at least one end of the second adhesive tape 223b.

That is, the adhesive layer of the second adhesive tape 223b does not coat the whole surface of the substrate of the second adhesive tape 223b, but a part of region is not coated with the adhesive layer, and therefore, the second non-adhesive region 104 is formed.

In the width direction of the first electrode plate 221, the second non-adhesive region 104 is located at at least one end of the second adhesive tape 223b, that is, the second non-adhesive region 104 can be located at one end of the second adhesive tape 223b in the width direction, or the second non-adhesive region 104 can be located at two ends of the second adhesive tape 223b in the width direction.

Therefore, if the second adhesive tape 223b and the first adhesive tape 223a are misplaced in the width direction of the first electrode plate 221 due to the tolerance of the adhering process, at least one end of the second adhesive tape 223b in the width direction of the first electrode plate 221 does not leak adhesive, but only the second non-adhesive regions 104 without stickiness are leaked. Therefore, the adhesive leakage probability of the first insulating member 223 is reduced, moreover, the problems of roll sticking, adhesive failure, tape breakage, even electrode plate damage, and the like caused by adhesive leakage are also reduced, thereby improving the reliability of the battery.

In some embodiments of the present application, as shown in FIG. 8 to FIG. 15, the second adhesive tape 223b includes two second non-adhesive regions 104; in the width direction of the first electrode plate 221, the two second non-adhesive regions 104 are respectively located at two ends of the second adhesive tape 223b; and the second adhesive region 103 is located between the two second non-adhesive regions 104.

That is, in the width direction of the first electrode plate 221, one second non-adhesive region 104 is connected to one end of the second adhesive region 103, and the other second non-adhesive region 104 is connected to the other end of the second adhesive region 103.

Therefore, if the second adhesive tape 223b and the first adhesive tape 223a are misplaced in the width direction of the first electrode plate 221 due to the tolerance of the adhering process, at least one end of the second adhesive tape 223b in the width direction of the first electrode plate 221 does not leak adhesive, but only the second non-adhesive regions 104 without stickiness are leaked. Therefore, the adhesive leakage probability of the first insulating member 223 is reduced, moreover, the problems of roll sticking, adhesive failure, tape breakage, even electrode plate damage, and the like caused by adhesive leakage are also reduced, thereby improving the reliability of the battery.

In some embodiments of the present application, the first adhesive tape 223a includes two first non-adhesive regions 102; in the width direction of the first electrode plate 221, the two first non-adhesive regions 102 are respectively located at two ends of the first adhesive tape 223a, and the first adhesive region 101 is located between the two first non-adhesive regions 102. Moreover, the second adhesive tape 223b includes two second non-adhesive regions 104; in the width direction of the first electrode plate 221, the two second non-adhesive regions 104 are respectively located at two ends of the second adhesive tape 223b; and the second adhesive region 103 is located between the two second non-adhesive regions 104.

If the second adhesive tape 223b and the first adhesive tape 223a are misplaced in the width direction of the first electrode plate 221 due to the tolerance of the adhering process, both ends of the first adhesive tape 223a and the second adhesive tape 223b in the width direction of the first electrode plate 221 do not leak adhesive, but only the first non-adhesive regions 102 without stickiness and the second non-adhesive regions 104 without stickiness are leaked. Therefore, the adhesive leakage probability of the first insulating member 223 is reduced, moreover, the problems of roll sticking, adhesive failure, tape breakage, even electrode plate damage, and the like caused by adhesive leakage are also reduced, thereby improving the reliability of the battery.

According to some embodiments of the present application, as shown in FIG. 8 to FIG. 12, and FIG. 14 to FIG. 15, in the width direction of the first electrode plate 221, the first electrode plate 221 includes a first functional region 105 coated with an active substance layer and a first uncoated foil region 106 uncoated with the active substance layer.

It is to be noted that, the first uncoated foil region 106 in the present application refers to that two side surfaces of the first uncoated foil region 106 in the thickness direction are not coated with the active substance layers.

In the width direction of the first electrode plate 221, the first functional region 105 has a first edge 105a and a second edge 105b.

The first adhesive region 101 can be adhered to the first functional region 105, and the second adhesive region 103 can be adhered to the first functional region 105.

In the width direction of the first electrode plate 221, the first adhesive region 101 extends beyond at least one of the first edge 105a and the second edge 105b.

That is, in the width direction of the first electrode plate 221, the first adhesive region 101 extends beyond the first edge 105a or the second edge 105b, or the first adhesive region 101 extends beyond the first edge 105a and the second edge 105b.

Therefore, the first adhesive region 101 can be bonded to the first functional region 105, and the portion of the first adhesive region 101 extending beyond the first functional region 105 can be bonded to the first uncoated foil region 106 or second adhesive paper 223b, thereby improving the connection stability of first adhesive paper 223a.

In the width direction of the first electrode plate 221, the second adhesive region 103 extends beyond at least one of the first edge 105a and the second edge 105b.

That is, in the width direction of the first electrode plate 221, the second adhesive region 103 extends beyond the first edge 105a or the second edge 105b, or the second adhesive region 103 extends beyond the first edge 105a and the second edge 105b.

Therefore, the second adhesive region 103 can be bonded to the first functional region 105, and the portion of the second adhesive region 103 extending beyond the first functional region 105 can be bonded to the first uncoated foil region 106 or the first adhesive paper 223a, thereby improving the connection stability of the second adhesive paper 223b.

In some embodiments of the present application, as shown in FIG. 8 to FIG. 11, in the width direction of the first electrode plate 221, the first adhesive region 101 and the second adhesive region 103 extend beyond the first edge 105a and the second edge 105b.

Therefore, the first adhesive region 101 can be bonded to the first functional region 105, and meanwhile, the portion of the first adhesive region 101 extending beyond the first functional region 105 can be bonded to the first uncoated foil region 106 or second adhesive paper 223b, thereby improving the connection stability of first adhesive paper 223a; the second adhesive region 103 can be bonded to the first functional region 105, and meanwhile, the portion of the second adhesive region 103 extending beyond the first functional region 105 can be bonded to an uncoated foil region or the first adhesive paper 223a, thus improving the connection stability of the second adhesive paper 223b.

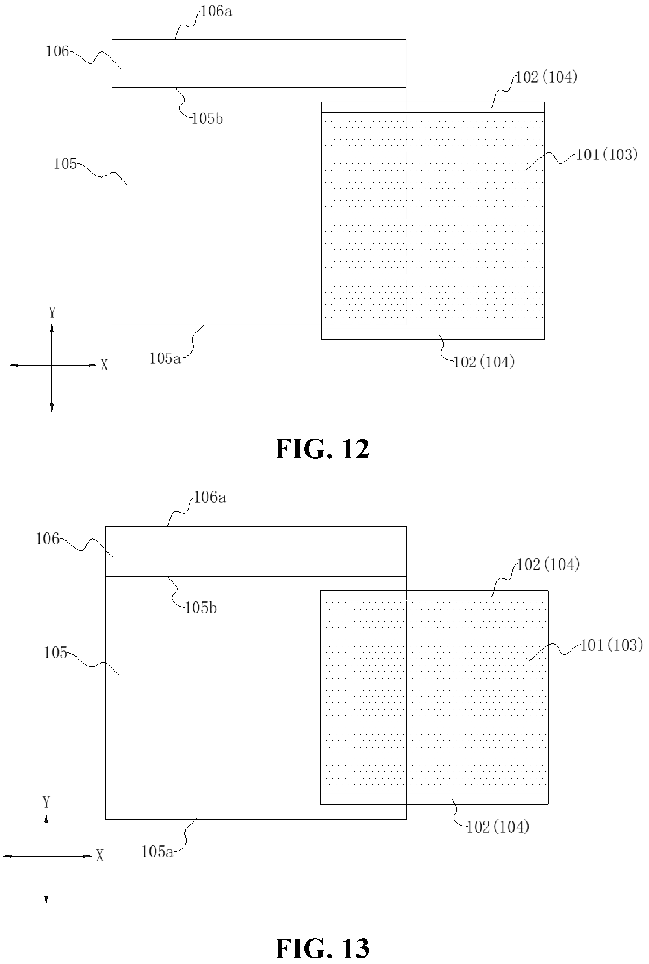

In some embodiments of the present application, as shown in FIG. 13, in the width direction of the first electrode plate 221, the first electrode plate 221 includes the first functional region 105 coated with the active substance and the first uncoated foil region 106 not coated with the active substance;
in the width direction of the first electrode plate 221, the first functional region 105 has the first edge 105a and the second edge 105b; and both the first adhesive region 101 and the second adhesive region 103 do not extend beyond the first edge 105a and the second edge 105b.

Therefore, the shielding of the first insulating member 223 on the first end portion 221a is reduced, and thus the energy density of the battery cell 20 is improved at least to a certain extent.

According to some embodiments of the present application, as shown in FIG. 8 to FIG. 12, and FIG. 15, in the width direction of the first electrode plate 221, the first uncoated foil region 106 is connected to the second edge 105b, and the first uncoated foil region 106 has a third edge 106a away from the first functional region 105.

That is, in the width direction of the first electrode plate 221, one first uncoated foil region 106 can be provided and is connected to the second edge 105b; the first edge 105a is not connected to the first uncoated foil region 106; the first edge 105a can be one edge of the first electrode plate 221 in the width direction; and the first edge 105a and the third edge 106a are two edges of the first end portion 221a in the width direction of the first electrode plate 221.

In the width direction of a first electrode plate 221, first adhesive tape 223a extends beyond at least one of the first edge 105a and the third edge 106a, and/or, the second adhesive tape 223b extends beyond at least one of the first edge 105a and the third edge 106a.

That is, in the width direction of the first electrode plate 221, the first adhesive tape 223a extends beyond the first edge 105a or the third edge 106a, or the first adhesive tape 223a extends beyond the first edge 105a and the third edge 106a.

In the width direction of the first electrode plate 221, the second adhesive tape 223b extends beyond the first edge 105a or the third edge 106a, or the second adhesive tape 223b extends beyond the first edge 105a and the third edge 106a.

In the width direction of the first electrode plate 221, the first adhesive region 101 on the first adhesive tape 223a may extend beyond the first edge 105a or the third edge 106a, or the first adhesive region 101 may extend beyond the first edge 105a and the third edge 106a. Definitely, it is to be understood that in the width direction of the first electrode plate 221, the first adhesive region 101 of the first adhesive tape 223a can also not extend beyond the first edge 105a and the third edge 106a.

In the width direction of the first electrode plate 221, the second adhesive region 103 on the second adhesive tape 223b may extend beyond the first edge 105a or the third edge 106a, or the first adhesive region 101 may extend beyond the first edge 105a and the third edge 106a. Definitely, it is to be understood that in the width direction of the first electrode plate 221, the second adhesive region 103 of the second adhesive tape 223b can also not extend beyond the first edge 105a and the third edge 106a.

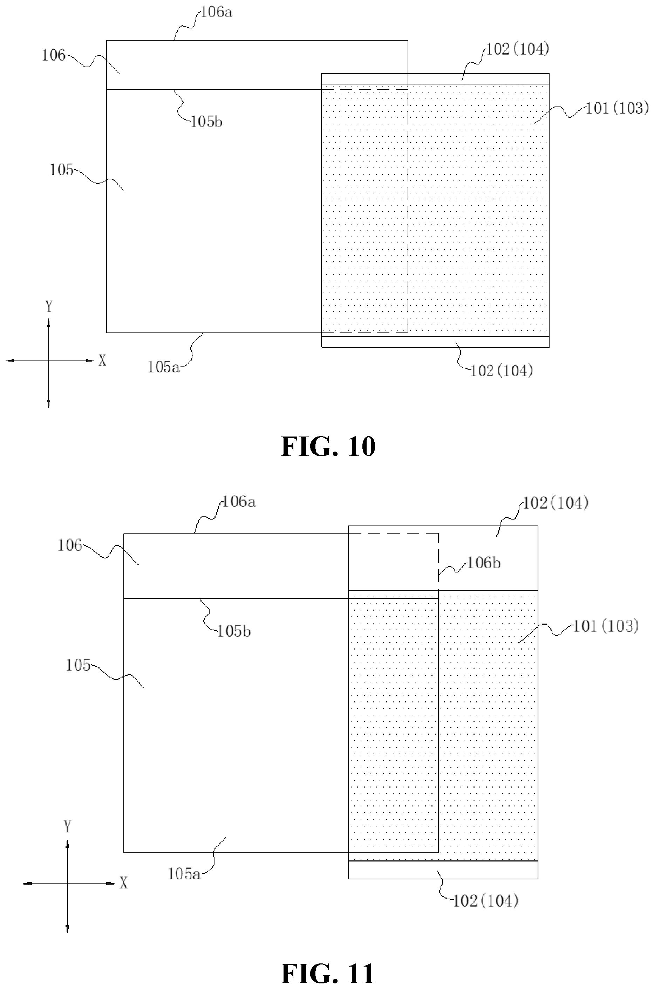

According to some embodiments of the present application, as shown in FIG. 9 and FIG. 11, the first end portion 221 has a fourth edge 106b, and the fourth edge 106b can be an edge of the first end portion 221a in the length direction of the first electrode plate 221.

In the length direction of the first electrode plate 221, the first adhesive tape 223a and the second adhesive tape 223b both extend beyond the fourth edge 106b, and the portion of the first adhesive tape 223a extending beyond the fourth edge 106b and the portion of the second adhesive tape 223b extending beyond the fourth edge 106b can be bonded to each other.

In the thickness direction of the first electrode plate 221, the joint of the third edge 106a and the fourth edge 106b is located between the first non-adhesive region 102 and the second non-adhesive region 104.

Therefore, the corner (the joint of the third edge 106a and the fourth edge 106b) of the first uncoated foil region 106 can be fixedly supported by the first non-adhesive region 102 and the second non-adhesive region 104, thereby effectively reducing the probability of the first electrode plate 221 having problems such as folding deformation.

It is to be understood that the strength of both the first non-adhesive region 102 and the second non-adhesive region 104 is greater than the strength of the first electrode plate 221, such that the first non-adhesive region 102 and the second non-adhesive region 104 can support the first electrode plate 221.

According to some embodiments of the present application, as shown in FIG. 8, in the width direction of the first electrode plate 221, the sizes of the first non-adhesive regions 102 are L₀, and 1mm≤L₀≤6mm.

For example, in the width direction of the first electrode plate 221, the sizes of the first non-adhesive regions 102 is 1 mm, 1.5 mm, 2 mm, 2.5 mm, 3 mm, 3.5 mm, 4 mm, 4.5 mm, 5 mm, 5.5 mm, and 6 mm.

The sizes of the first non-adhesive regions 102 in the width direction of the first electrode plate 221 are only a specific example, and is not limited; and any size of the first non-adhesive regions 102 within the above range in the width direction of the first electrode plate 221 is within the scope of protection of the present application.

Since the sizes of the first non-adhesive regions 102 in the width direction of the first electrode plate 221 are within the above range, on the one hand, if first adhesive tape 223a and the second adhesive tape 223b are misplaced in the width direction of the first electrode plate 221, the first non-adhesive regions 102 are sufficient in width, so that the adhesive layer of the first adhesive tape 223a is not exposed; and on the other hand, it also prevents the sizes of the first non-adhesive regions 102 from being too large, which would result in insufficient sizes of the first adhesive region 101, thereby affecting the bonding performance of the first adhesive tape 223a.

According to some embodiments of the present application, 2mm≤L₀≤4mm. For example, the sizes of the first non-adhesive regions 102 is 2 mm, 2.4 mm, 2.8 mm, 3.2 mm, 3.6 mm, and 4 mm.

Since the sizes of the first non-adhesive regions 102 in the width direction of the first electrode plate 221 are within the above range, on the one hand, if first adhesive tape 223a and the second adhesive tape 223b are misplaced in the width direction of the first electrode plate 221, the first non-adhesive regions 102 are sufficient in width, so that the adhesive layer of the first adhesive tape 223a is not exposed; and on the other hand, it also further prevents the sizes of the first non-adhesive regions 102 from being too large, which would result in insufficient sizes of the first adhesive region 101, thereby affecting the bonding performance of the first adhesive tape 223a.

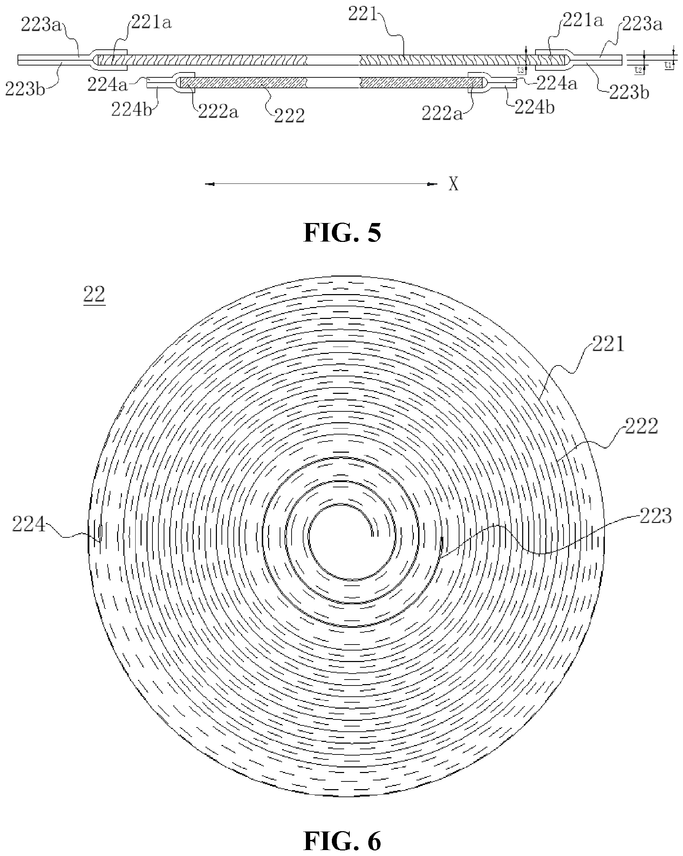

In some embodiments of the present application, as shown in FIG. 5, the maximum thickness of the first adhesive tape 223a is t₁, the maximum thickness of the second adhesive tape 223b is t₂, the maximum thickness of the first end portion 221a is t₃, and t₁≤t₃, and t₂≤t₃.

If the first insulating member 223 is not arranged at the first end portion 221a, a step is formed between the first end portion 221a and the adjacent electrode plate, and after the battery cell 20 swells, the step easily contacts with the shell 21 or the adjacent electrode plate region to generate stress concentration, resulting in the risk of breakage of the electrode plates.

The maximum thickness of the first adhesive tape 223a is less than that of the first end portion 221a, and if the step is formed between the first adhesive tape 223a and the side surface of the first end portion 221a in the thickness direction, the step is lower than the step between the first end portion 221a and the adjacent electrode plate region when the first insulating member 223 is not arranged, and therefore, the stress concentration generated by the step can be reduced, and the risk of cracking of the first electrode plate 221 caused by the stress concentration is reduced. Similarly, the maximum thickness of the second adhesive tape 223b is less than that of the first end portion 221a, and if the step is formed between the second adhesive tape 223b and the side surface of the first end portion 221a in the thickness direction, the step is lower than the step between the first end portion 221a and the adjacent electrode plate region when the first insulating member 223 is not arranged, and therefore, the stress concentration generated by the step can be reduced, and the risk of cracking of the first electrode plate 221 caused by the stress concentration is reduced.

In some embodiments of the present application, t₁+t₂≤t₃.

In the embodiment of the present application, the first adhesive tape 223a and the second adhesive tape 223b are adhered to two side surfaces of the first end portion 221a in the thickness direction, and the thickness of the first adhesive tape 223a and the thickness of the second adhesive tape 223b meet: t₁+t₂≤t₃.

Therefore, if the first adhesive tape 223a and the second adhesive tape 223b still form the steps relative to the side surface of the first end portion 221a in the thickness direction, the height of the step is relatively small and is always less than the height of the step between the first end portion 221a and the adjacent electrode plate region when the first insulating member 223 is not arranged, such that the stress concentration generated by the steps can be reduced, and the risk of cracking of the first electrode plate 221 caused by the stress concentration is reduced.

In some embodiments of the present application, as shown in FIG. 5, t₁≤0.5t₃, t₂≤0.5t₃ Therefore, the height of step between the first adhesive tape 223a and the first end portion 221a is further reduced, and the height of the step between second adhesive tape 223b and the first end portion 221a is reduced. Therefore, the stress concentration generated by the steps can be reduced, and the risk of cracking of the first electrode plate 221 is reduced.

It is to be noted that if the electrode assembly 22 is of a winding structure, and the first insulating member 223 is not arranged, the step will be generated between the first end portion 221a and an inner ring or outer ring of adjacent electrode plate.

In some embodiments of the present application, as shown in FIG. 8, in the thickness direction of the first end portion 221a, a projection of the first insulating member 223 and the projection of the first end portion 221a have a first overlapped area; and in the length direction of the first electrode plate 221, the maximum size of the first overlapped area is L₁, and L₁≤100mm.

For example, the maximum size L₁ of the first overlapped area can be 10 mm, 20 mm, 30 mm, 40 mm, 50 mm, 60 mm, 70 mm, 80 mm, 90 mm, and 100 mm.

The maximum size of the first overlapped area is only a specific example, and is not limited, and any maximum size of the first overlapped area within above range is within the scope of protection of the present application.

Therefore, on one hand, the first insulating member 223 always keeps connecting with the first end portion 221a and covers at least part of the first end portion 221a to shield burrs, thereby reducing the probability that the burrs pierce the separator; and on the other hand, the first overlapped region is not too large, and the first insulating member 223 does not cover too many regions of the first electrode plate 221, so that the influence on the energy density of the battery cell 20 is relatively small.

In some embodiments of the present application, 2mm≤L₁≤15mm. For example, the maximum size of the first overlapped area is 2 mm, 4 mm, 6 mm, 8 mm, 10 mm, 12 mm, 14 mm, and 15 mm.

The maximum size of the first overlapped area is only a specific example, and is not limited, and any maximum size of the first overlapped area within above range is within the scope of protection of the present application.

Therefore, on one hand, the first insulating member 223 always keeps connecting with the first end portion 221a and covers at least part of the first end portion 221a to shield burrs, thereby further reducing the probability that the burrs pierce the separator; and on the other hand, the first overlapped region is not too large, and the first insulating member 223 does not cover too many regions of the first electrode plate 221, so that the energy density of the battery cell 20 is further ensured.

According to some embodiments of the present application, as shown in FIG. 4 and FIG. 6, the first electrode plate 221 is provided with two first end portions 221a which are respectively located at two ends of the first electrode plate 221 in the length direction, and each first end portion 221a is provided with the first insulating member 223.

Therefore, the two ends of the first electrode plate 221 in the length direction can be protected by the first insulating members 223, and the burrs at the two ends of the first electrode plate 221 in the length direction can be effectively shielded, thus the risk of short circuit in the positive electrode plate and the negative electrode plate caused by the burrs piercing the separator can be reduced, and the reliability of the battery is improved.

In some embodiments of the present application, as shown in FIG. 4 to FIG. 7 and FIG. 16 to FIG. 17, the electrode assembly 22 further includes a second electrode plate 222 having the polarity opposite to that of the first electrode plate 221.

The second electrode plate 222 is one of the positive electrode plate and the negative electrode plate, and the first electrode plate 221 is the other one of the positive electrode plate and the negative electrode plate.

For example, if the second electrode plate 222 is the negative electrode plate, the first electrode plate 221 will be the positive electrode plate; and if the second electrode plate 222 is the positive electrode plate, the first electrode plate 221 will be the negative electrode plate.

The second electrode plate 222 has the second end portion 222a in the length direction, and it is to be understood that if the electrode assembly 22 is of the winding structure, the length direction of the second electrode plate 222 is the winding direction of the second electrode plate 222.

One end of a second electrode plate 222 in the length direction can be provided with the second end portion 222a, and both ends of the second electrode plate 222 in the length direction can be provided with the second end portions 222a.

If the electrode assembly 22 is of the winding structure, the second end portion 222a can be the winding starting end or the winding ending end of the second electrode plate 222.

The electrode assembly 22 further includes the second insulating member 224, the second insulating member 224 can be arranged at the second end portion 222a and can shield the burrs on the second end portion 222a so as to relive the problem that the burrs pierce the separator to cause short circuit of the positive electrode and the negative electrode.

The second insulating member 224 includes a third adhesive tape 224a and a fourth adhesive tape 224b which are respectively bonded to the two side surfaces of the second end portion 222a in the thickness direction.

That is, the third adhesive tape 224a is adhered to one side surface of the second end portion 222a in the thickness direction, and a fourth adhesive tape 224b is adhered to the other side surface of the second end portion 222a in the thickness direction.

In the length direction of the second electrode plate 222, the third adhesive tape 224a and the fourth adhesive tape 224b both extend beyond the second end portion 222a, and the portions of the third adhesive tape 224a and the fourth adhesive tape 224b extending beyond the second end portion 222a are bonded to each other.

That is, in the length direction of the second electrode plate 222, the third adhesive tape 224a and the fourth adhesive tape 224b are not flush with the second end portion 222a, but extend beyond the second end portion 222a, such that the third adhesive tape 224a and the fourth adhesive tape 224b can be respectively bonded to the two side surfaces of the second end portion 222a in the thickness direction, and can be adhered and fixed together.

The third adhesive tape 224a includes a third adhesive region 107a coated with the adhesive tape layer and a third non-adhesive region 107b not coated with the adhesive layer; and in the width direction of the second electrode plate 222, the third non-adhesive region 107b is located at at least one end of the third adhesive tape 224a.

That is, the adhesive layer of the third adhesive tape 224a does not coat the whole surface of the substrate of the third adhesive tape 224a, but a part of the region not coated with the adhesive layer forms a third non-adhesive region 107b.

In the width direction of the second electrode plate 222, the third non-adhesive region 107b is located at at least one end of the third adhesive tape 224a, that is, the third non-adhesive region 107b can be located at one end of the third adhesive tape 224a in the width direction, or the third non-adhesive region 107b can be located at two ends of the third adhesive tape 224a in the width direction.

Therefore, if the third adhesive tape 224a and the fourth adhesive tape 224b cannot be aligned in the width direction of the second electrode plate 222 due to the adhering process, the third non-adhesive region 107b is arranged on at least one end of the third adhesive tape 224a in the width direction of the second electrode plate 222, such that at least one end of the third adhesive tape 224a in the width direction of the second electrode plate 222 cannot leak adhesive, and only the third non-adhesive region 107b without stickiness is leaked.

For example, if the third non-adhesive region 107b is arranged at one end of the third adhesive tape 224a in the width direction, at least the third adhesive tape 224a is moved and displaced relative to the fourth adhesive tape 224b in the width direction of the second electrode plate 222 (from the third non-adhesive regions 107a to the third non-adhesive region 107b), the third non-adhesive region 107b will be leaked, and the adhesive is not directly leaked.

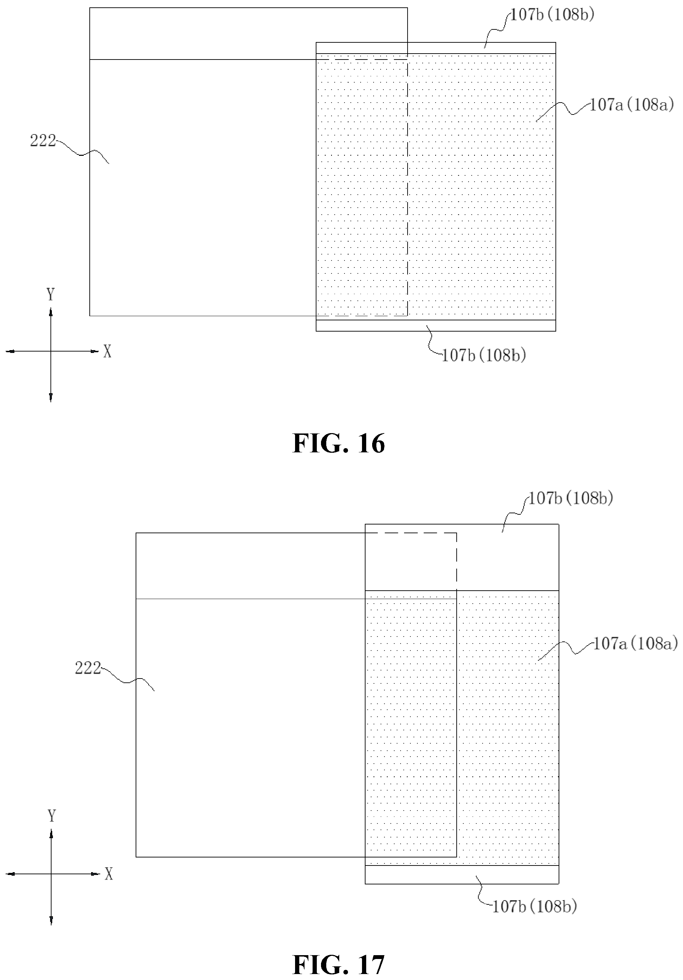

According to some embodiments of the present application, as shown in FIG. 16 to FIG. 17, the third adhesive tape 224a includes two third non-adhesive regions 107b; in the width direction of the second electrode plate 222, the two third non-adhesive regions 107b are respectively located at two ends of the third adhesive tape 224a; and the third adhesive region 107a is located between the two third non-adhesive regions 107b.

That is, in the width direction of the second electrode plate 222, one third non-adhesive region 107b is connected to one end of the third adhesive region 107a, and the other third non-adhesive region 107b is connected to the other end of the third adhesive region 107a.

Therefore, if the third adhesive tape 224a and the fourth adhesive tape 224b are misplaced in the width direction of the second electrode plate 222 due to the tolerance of the adhering process, at least one end of the third adhesive tape 224a in the width direction of the second electrode plate 222 does not leak adhesive, but only the third non-adhesive regions 107b without stickiness are leaked. Therefore, the adhesive leakage probability of the second insulating member 224 is reduced, and the problems of roll sticking, adhesive failure, tape breakage, even electrode plate damage, and the like caused by adhesive leakage are also reduced, thereby improving the reliability of the battery.

In some embodiments of the present application, as shown in FIG. 16 to FIG. 17, the fourth adhesive tape 224b includes a fourth adhesive region 108a coated with the adhesive layer and a fourth non-adhesive region 108b not coated with the adhesive layer; and in the width direction of the second electrode plate 222, the fourth non-adhesive region 108b is located at at least one end of the fourth adhesive tape 224b.

That is, the adhesive layer of the fourth adhesive tape 224b does not coat the whole surface of the substrate of the fourth adhesive tape 224b, but a portion of region not coated with the adhesive layer forms the fourth non-adhesive region 108b.

In the width direction of the second electrode plate 222, the fourth non-adhesive region 108b is located at at least one end of the fourth adhesive tape 224b, that is, the fourth non-adhesive region 108b can be located at one end of the fourth adhesive tape 224b in the width direction, or the fourth non-adhesive region 108b can be located at two ends of the fourth adhesive tape 224b in the width direction.

Therefore, if the fourth adhesive tape 224b and the third adhesive tape 224a are misplaced in the width direction of the second electrode plate 222 due to the tolerance of the adhering process, at least one end of the fourth adhesive tape 224b in the width direction of the second electrode plate 222 does not leak adhesive, but only the fourth non-adhesive region 108b without stickiness is leaked. Therefore, the adhesive leakage probability of the second insulating member 224 is reduced, and the problems of roll sticking, adhesive failure, tape breakage, even electrode plate damage, and the like caused by adhesive leakage are also reduced, thereby improving the reliability of the battery.

In some embodiments of the present application, as shown in FIG. 16 to FIG. 17, the fourth adhesive tape 224b includes two fourth non-adhesive regions 108b; in the width direction of the second electrode plate 222, the two fourth non-adhesive regions 108b are respectively located at two ends of the fourth adhesive tape 224b; and the fourth adhesive region 108a is located between the two fourth non-adhesive regions 108b.

That is, in the width direction of the second electrode plate 222, one fourth non-adhesive region 108b is connected to one end of the fourth adhesive region 108a, and the other fourth non-adhesive region 108b is connected to the other end of the fourth adhesive region 108a.

Therefore, if the fourth adhesive tape 224b and the third adhesive tape 224a are misplaced in the width direction of the second electrode plate 222 due to the tolerance of the adhering process, at least one end of the fourth adhesive tape 224b in the width direction of the second electrode plate 222 does not leak adhesive, but only the fourth non-adhesive region 108b without stickiness is leaked. Therefore, the adhesive leakage probability of the second insulating member 224 is reduced, and the problems of roll sticking, adhesive failure, tape breakage, even electrode plate damage, and the like caused by adhesive leakage are also reduced, thereby improving the reliability of the battery.

In some embodiments of the present application, the third adhesive tape 224a includes two third non-adhesive regions 107b; in the width direction of the second electrode plate 222, the two third non-adhesive regions 107b are respectively located at two ends of the third adhesive tape 224a; and the third adhesive region 107a is located between the two third non-adhesive regions 107b. Moreover, the fourth adhesive tape 224b includes two fourth non-adhesive regions 108b; in the width direction of the second electrode plate 222, the two fourth non-adhesive regions 108b are respectively located at two ends of the fourth adhesive tape 224b; and the fourth adhesive region 108a is located between the two fourth non-adhesive regions 108b.

If the fourth adhesive tape 224b and the third adhesive tape 224a are misplaced in the width direction of the second electrode plate 222 due to the tolerance of the adhering process, both ends of the third adhesive tape 224a and the fourth adhesive tape 224b in the width direction of the second electrode plate 222 do not leak adhesive, but only the third non-adhesive regions 107b without stickiness and the fourth non-adhesive regions 108b without stickiness are leaked. Therefore, the adhesive leakage probability of the second insulating member 224 is reduced, and the problems of roll sticking, adhesive failure, tape breakage, even electrode plate damage, and the like caused by adhesive leakage are also reduced, thereby improving the reliability of the battery.

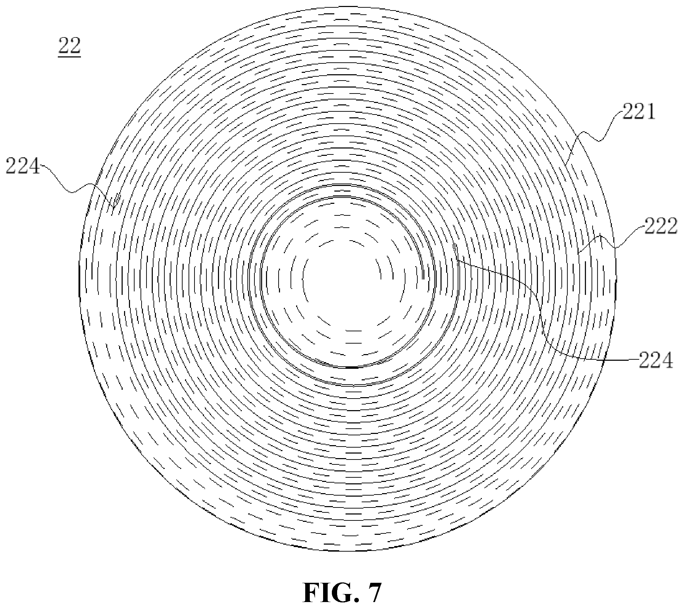

According to some embodiments of the present application, as shown in FIG. 4 and FIG. 7, the second electrode plate 222 is provided with two second end portions 222a which are respectively located at two ends of the second electrode plate 222 in the length direction; and each second end portion 222a is provided with the second insulating member 224.

Therefore, the two ends of the second electrode plate 222 in the length direction can be protected by the second insulating members 224, and the burrs at the two ends of the second electrode plate 222 in the length direction can be effectively shielded, thus the risk of short circuit in the positive electrode plate and the negative electrode plate caused by the burrs piercing the separator can be reduced, and the reliability of the battery is improved.

According to some embodiments of the present application, as shown in FIG. 4, FIG. 6 to FIG. 7, the electrode assembly 22 is of the winding structure, and the length direction of the first electrode plate 221 is the winding direction of the first electrode plate 221. Therefore, the first end portion 221a can be the winding starting end or/and the winding ending end of the first electrode plate 221.

If the first end portion 221a is located at the innermost ring of a multi-ring electrode plates; in the winding direction, one portion of the first insulating member 223 can be bonded to two side surfaces of the first end portion 221a in the thickness direction, the other portion of the first insulating member 223 extends beyond the first end portion 221a and wound into the multi-ring structure; and the multi-ring structure is located in a central region of the electrode assembly 22, so that the effect of supporting the electrode assembly 22 can be achieved when the electrode assembly 22 swells.

The battery 100 of the embodiment of the present application is simply described in the following.

The battery 100 in the embodiment of the present application includes the battery cell 20 in the above embodiments. The battery 100 in the embodiment of the present application includes the abovementioned battery cell 20, so that the reliability of the battery 100 is improved.

The electrical device in the embodiment of the present application is simply described in the following.

The electrical device in the embodiment of the present application includes the battery 100 in the above embodiment; and the electrical device in the embodiment of the present application includes the abovementioned battery 100, so that the stability of the electrical device is improved, and the use experience of a user is improved.

Although the present application is described with reference to the preferred embodiments, without departing from the scope of the present application, various improvements may be made to it and parts therein may be replaced with equivalents. In particular, as long as there are no structural conflicts, the technical features mentioned in the individual embodiments can be combined in any way. The present application is not limited to the particular Examples disclosed herein, but rather includes all technical solutions falling within the scope of the claims.

## Claims

1. A battery cell, comprising:
a shell; and
an electrode assembly which is arranged in the shell and comprises:
a first electrode plate which is provided with a first end portion in a length direction; and
a first insulating member comprising a first adhesive tape and a second adhesive tape which are respectively bonded to two side surfaces of the first end portion in a thickness direction; wherein
in the length direction of the first electrode plate, the first adhesive tape and the second adhesive tape both extend beyond the first end portion, and the portions of the first adhesive tape and the second adhesive tape extending beyond the first end portion are bonded to each other;
the first adhesive tape comprises a first adhesive region coated with an adhesive layer and a first non-adhesive region not coated with the adhesive layer; and in the width direction of the first electrode plate, the first non-adhesive region is located at at least one end of the first adhesive tape.

2. The battery cell according to claim 1, wherein the first adhesive tape comprises two first non-adhesive regions; and in the width direction of the first electrode plate, the two first non-adhesive regions are respectively located at two ends of the first adhesive tape, and the first adhesive region is located between the two first non-adhesive regions.

3. The battery cell according to claim 1 or 2, wherein the second adhesive tape comprises a second adhesive region coated with the adhesive layer and a second non-adhesive region not coated with the adhesive layer; and in the width direction of the first electrode plate, the second non-adhesive region is located at at least one end of the second adhesive tape.

4. The battery cell according to claim 3, wherein the second adhesive tape comprises two second non-adhesive regions; and in the width direction of the first electrode plate, the two second non-adhesive regions are respectively located at two ends of the second adhesive tape, and the second adhesive region is located between the two second non-adhesive regions.

5. The battery cell according to claim 3 or 4, wherein in the width direction of the first electrode plate, the first electrode plate comprises a first functional region coated with an active substance layer and a first uncoated foil region not coated with the active substance layer;
in the width direction of the first electrode plate, the first functional region has a first edge and a second edge; and
in the width direction of the first electrode plate, the first adhesive region extends beyond at least one of the first edge and the second edge, and/or, the second adhesive region extends beyond at least one of the first edge and the second edge.

6. The battery cell according to claim 5, wherein in the width direction of the first electrode plate, the first adhesive region and the second adhesive region both extend beyond the first edge and the second edge.

7. The battery cell according to claim 3 or 4, wherein in the width direction of the first electrode plate, the first electrode plate comprises a first functional region coated with an active substance layer and a first uncoated foil region not coated with the active substance layer;
in the width direction of the first electrode plate, the first functional region has a first edge and a second edge; and both the first adhesive region and the second adhesive region do not extend beyond the first edge and the second edge.

8. The battery cell according to any one of claims 5 to 7, wherein in the width direction of the first electrode plate, the first uncoated foil region is connected to the second edge, and the first uncoated foil region has a third edge away from the first functional region; and
in the width direction of the first electrode plate, the first adhesive tape extends beyond at least one of the first edge and the third edge, and/or, the second adhesive tape extends beyond at least one of the first edge and the third edge.

9. The battery cell according to claim 8, wherein the first end portion has a fourth edge; in the length direction of the first electrode plate, the first adhesive tape and the second adhesive tape both extend beyond the fourth edge; and
in the thickness direction of the first electrode plate, a joint of the third edge and the fourth edge is located between the first non-adhesive region and the second non-adhesive region.

10. The battery cell according to any one of claims 1 to 9, wherein in the width direction of the first electrode plate, sizes of the first non-adhesive regions are L₀, which meets: 1mm≤L₀≤6mm.

11. The battery cell according to any one of claims 1 to 9, wherein the maximum thickness of the first adhesive tape is t₁, the maximum thickness of the second adhesive tape is t₂, the maximum thickness of a first end portion is t₃, and t₁≤t₃, t₂≤t₃.

12. The battery cell according to claim 11, wherein t₁+t₂≤t₃.

13. The battery cell according to claim 12, wherein t₁≤0.5t₃, t₂≤0.5t₃.

14. The battery cell according to any one of claims 1 to 13, wherein in the thickness direction of the first end portion, a projection of the first insulating member and the projection of the first end portion have a first overlapped region; and in the length direction of the first electrode plate, the maximum size of the first overlapped region is L₁, and L₁≤100mm.

15. The battery cell according to claim 14, wherein 2mm≤L₁≤15mm.

16. The battery cell according to any one of claims 1 to 15, wherein the first electrode plate has two first end portions which are respectively located at two ends of the first electrode plate in the length direction, and each first end portion is provided with the first insulating member.

17. The battery cell according to any one of claims 1 to 16, wherein the electrode assembly also comprises: a second electrode plate which is one of the positive electrode plate and the negative electrode plate, the first electrode plate being the other one of the positive electrode plate and the negative electrode plate, and the second electrode plate having a second end portion in the length direction; and
a second insulating member which comprises a third adhesive tape and a fourth adhesive tape, the third adhesive tape and the fourth adhesive tape being respectively bonded to two side surfaces of the second end portion in the thickness direction;
in the length direction of the second electrode plate, the third adhesive tape and the fourth adhesive tape both extend beyond the second end portion, and the portions of the third adhesive tape and the fourth adhesive tape extending beyond the second end portion are bonded to each other;
the third adhesive tape comprises a third adhesive region coated with the adhesive layer and a third non-adhesive region not coated with the adhesive layer; and in the width direction of the second electrode plate, the third non-adhesive region is located at at least one end of the third adhesive tape.

18. The battery cell according to claim 17, wherein the third adhesive tape comprises two third non-adhesive regions; in the width direction of the second electrode plate, the two third non-adhesive regions are respectively located at two ends of the third adhesive tape; and the third adhesive region is located between the two third non-adhesive regions.

19. The battery cell according to claim 17 or 18, wherein the fourth adhesive tape comprises a fourth adhesive region coated with the adhesive layer and a fourth non-adhesive region not coated with the adhesive layer; and in the width direction of the second electrode plate, the fourth non-adhesive region is located at at least one end of the fourth adhesive tape.

20. The battery cell according to claim 19, wherein the fourth adhesive tape comprises two fourth non-adhesive regions; in the width direction of the second electrode plate, the two fourth non-adhesive regions are respectively located at two ends of the fourth adhesive tape; and the fourth non-adhesive region is located between the two fourth non-adhesive regions.

21. The battery cell according to any one of claims 17 to 20, wherein the second electrode plate has two second end portions which are respectively located on at two ends of the second electrode plate in the length direction; and each second end portion is provided with the second insulating member.

22. The battery cell according to any one of claims 1 to 21, wherein the electrode assembly is of a winding structure, and the length direction of the first electrode plate is a winding direction of the first electrode plate.

23. A battery, comprising the battery cell according to any one of claims 1 to 22.

24. An electrical device, comprising the battery cell according to any one of claims 1 to 22 or the battery according to claim 23, wherein the battery cell or the battery is configured to provide electric energy.
